# FASCICULE DE BREVET EUROPEEN

(11) **EP 3 105 707 B1**
(45) Date de publication et mention de la délivrance du brevet: **24.03.2021**
(21) Numéro de dépôt: 14833587.0
(22) Date de dépôt: 19.12.2014
(51) Int. Cl.: G06K 7/10, G06K 7/14

(54) **DISPOSITIF DE LECTURE D'UN CODE D'IDENTIFICATION SUR UNE FEUILLE DE VERRE EN DÉFILEMENT**
VORRICHTUNG ZUM LESEN EINES IDENTIFIKATIONSCODES AUF EINEM SICH BEWEGENDEN GLASSCHEIBE
DEVICE FOR READING AN IDENTIFICATION CODE ON A MOVING GLASS SHEET

(30) Priorité: 11.02.2014 FR 1451030
(43) Date de publication de la demande: 21.12.2016
(73) Titulaire: SAINT-GOBAIN GLASS FRANCE, 92400 Courbevoie (FR)
(72) Inventeur: PERROTTON, Cédric, F-75010 Paris (FR); BROCARD, Nathanael, F-60200 Compiegne (FR)
(74) Mandataire: Saint-Gobain Recherche
(86) Numéro de dépôt international: PCT/FR2014/053482
(87) Numéro de publication internationale: WO 2015/121550

(56) Documents cités:
- US-A1- 2004 206 819
- US-B2- 8 118 225

## Description

La présente invention concerne le domaine des codes d'identification marqués sur des feuilles de verre qui sont seules ou intégrées à un produit verrier.

Il est possible d'utiliser des symboles en une dimension de type « code-barres » ou analogue et des symboles en deux dimensions de type « Datamatrix » ou analogue pour servir de codes d'identification de plaques de verre.

Ces codes peuvent contenir tout type d'information tel que par exemple un numéro servant d'identifiant du substrat. Des informations telles que le lieu de fabrication ou l'heure et la date de fabrication peuvent également être intégrées, de même que des informations de tout autre type adapté.

Les symboles sont par exemple marqués au moyen d'un rayonnement laser de tout type adapté, orienté de préférence perpendiculairement à la feuille de verre, i.e. au plan général de la feuille de verre. En effet, les symboles ainsi marqués sont généralement destinés à être lus de face en positionnant un appareil face au symbole, et donc face à l'une des deux faces principales de la feuille de verre.

US2001/000010, US2004/0206819, US2006/0131419 décrivent des dispositifs de lecture de code sur du verre avec éclairage de type darkfield.

Cependant, ces dispositifs nécessitent de prendre au moins une image en deux dimensions (i.e. sur plusieurs lignes de pixels) de la totalité du code. En cas d'incertitude sur la position du code et/ou de défilement rapide du verre, il est alors nécessaire de procéder à plusieurs prises de vue. L'analyse de ces différentes images requiert un temps de traitement important, ce qui n'est généralement pas compatible avec des vitesses élevées de déplacement du substrat.

En outre, le code risque d'être décalé par rapport à une position d'éclairement optimale et l'éclairement de ce fait non uniforme sur l'image acquise. Le contraste risque également de ne pas être suffisant pour un traitement et décodage de l'image fiable.

US 8,118,225 propose un dispositif d'éclairage particulier avec des codes contenant des particules métalliques pour améliorer le contraste. Il présente cependant les mêmes inconvénients en cas d'incertitude sur la position du symbole lors de la lecture d'un code au défilé.

Il est de ce fait difficile d'adapter de tels dispositifs à des lignes industrielles.

Un but de l'invention est de prévoir un dispositif de lecture permettant une lecture rapide de codes marqués sur du verre en défilement, malgré une incertitude sur la position des codes et/ou une vitesse de défilement élevée.

Un aspect de l'invention concerne un dispositif de lecture d'un symbole formant code marqué sur une face d'un substrat comprenant une feuille de verre, le substrat étant en défilement, le dispositif comprenant :
- un éclairage ;
- une caméra configurée pour acquérir au moins une image d'au moins une partie du symbole, le substrat en défilement étant éclairé par l'éclairage ;
- un calculateur relié à la caméra et configuré pour être apte à mettre en œuvre une étape de traitement d'image dans laquelle l'image acquise est traitée par le calculateur et décodée,
dans lequel la caméra utilisée est linéaire et l'éclairage est de type Darkfield et dans lequel le dispositif est configuré pour réaliser, préalablement à l'étape de traitement par le calculateur, plusieurs acquisitions d'images avec la caméra linéaire de différentes parties du symbole.

L'utilisation d'une caméra linéaire en Darkfield permet d'avoir un éclairement uniforme sur le code, d'être tolérant à une incertitude sur la position du code et de pouvoir procéder à des acquisitions d'images, ainsi qu'au traitement et décodage de ces images, à des vitesses de défilement élevées allant jusqu'à 90m/min.

En outre, ce dispositif permet de lire un code même si le verre est retourné, i.e. avec une profondeur de champ importante obtenue grâce à un meilleur contraste sur les images acquises.

Le dispositif permet un encombrement réduit de l'éclairage. L'éclairage peut ainsi être disposé entre deux rouleaux d'un convoyeur dont les rouleaux sont par exemple espacés de moins de 400mm, voire de moins de moins de 200 ou même 100mm.

Selon des modes particuliers de réalisation, le dispositif comporte en outre l'une ou plusieurs des caractéristiques suivantes prise(s) isolément ou suivant toutes les combinaisons techniquement possibles :
- l'éclairage comprend deux zones d'éclairement et une zone sombre entre les deux zones d'éclairement, la caméra linéaire observant vers la zone sombre ;
- la zone sombre est obtenue en masquant une zone d'éclairement de l'éclairage ;
- l'éclairage comprend une source de lumière et un élément diffusant de façon à produire une lumière diffuse ;
- le plan de l'éclairement est perpendiculaire à l'axe optique de la caméra ;
- la caméra et l'éclairage sont disposés de part et d'autre du substrat, le substrat étant transparent ;
- la caméra et l'éclairage sont disposés du même côté du substrat, le substrat ayant une surface spéculaire ;
- le dispositif comprend un appareil de mesure du déplacement du substrat, le dispositif étant configuré pour que le déclenchement de l'acquisition des images du substrat par la caméra linéaire soit commandé en fonction du déplacement mesuré ;
- le symbole peut être lu et décodé à une position allant de 0mm jusqu'à 10mm par rapport au plan focal de la caméra ;
- le champ de vision de la caméra est non parallèle et de préférence perpendiculaire par rapport à la direction de défilement du substrat ;
- la largeur du champ de vision de la caméra est d'au moins 30mm.

Selon un autre aspect, l'invention a pour objet un procédé de lecture d'un symbole formant code marqué sur une face d'un substrat comprenant une feuille de verre, le substrat étant en défilement, le procédé comprenant :
- au moins une acquisition, avec une caméra, d'une image d'au moins une partie du symbole, le substrat en défilement étant éclairé par un éclairage ;
- une étape de traitement d'image dans laquelle l'image acquise est traitée par un calculateur et décodée,
dans lequel la caméra utilisée est linéaire et l'éclairage est de type Darkfield et, préalablement à l'étape de traitement, plusieurs acquisitions d'images de différentes parties du symbole sont réalisées avec la caméra linéaire.

De façon préférée, le dispositif de lecture utilisé dans le procédé est tel que décrit ci-dessus.

L'invention sera mieux comprise à la lecture de la description qui va suivre, faite uniquement à titre d'exemple illustratif, en référence à des figures, parmi lesquelles :
- - La figure 1 représente une vue schématique d'un exemple de dispositif pour lire un code d'identification sur une feuille de verre, selon un mode de réalisation de l'invention ;
- - La figure 2 est une vue de face de l'éclairage de la figure 1, tel que l'aperçoit la caméra ;
- La figure 3 est un schéma analogue à la figure 1 illustrant une autre mode de réalisation avec un éclairage en réflexion, par exemple pour application au cas d'un substrat spéculaire et non transparent.

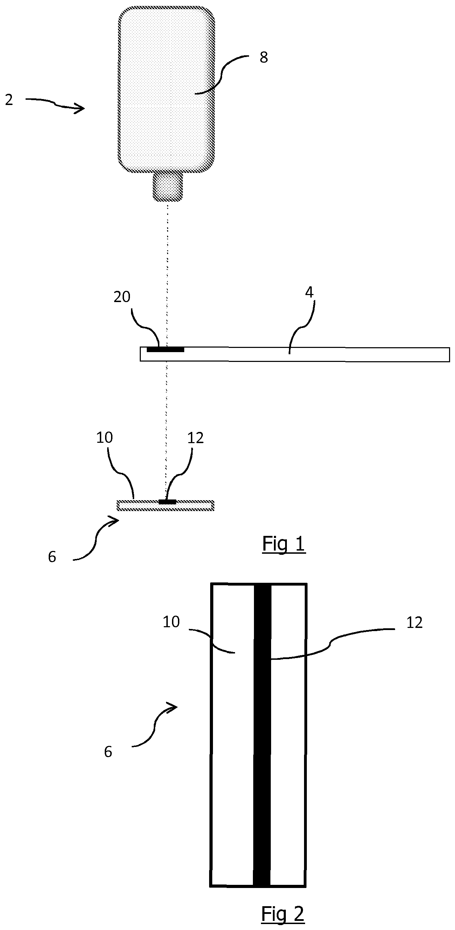

Le dispositif 2 de la figure 1 est installé dans une installation industrielle dans laquelle des feuilles de verre 4 défilent, par exemple sur un convoyeur.

Le dispositif de lecture 2 est installé sur la ligne, par exemple au niveau d'un convoyeur.

Il comprend un éclairage 6, une caméra 8 et un calculateur de traitement d'image relié à la caméra (non représenté).

Dans ce mode de réalisation, l'éclairage et la caméra sont disposés de part et d'autre du substrat 4 de façon à avoir un éclairage en transmission.

Il est essentiel que l'éclairage soit de type Darkfield (i.e. indirect) et que la caméra soit linéaire (i.e. à une seule rangée de pixels).

On entend par un éclairage de type Darkfield un éclairage indirect, i.e. non orienté directement vers l'objectif de la caméra de sorte que la caméra observe une zone sombre. Mais la zone sombre correspondante sur la feuille de verre est traversée par de la lumière n'atteignant normalement pas directement la caméra sauf élément diffusant venant illuminer cette zone sombre de la feuille de verre. C'est-à-dire qu'on observe le code en « blanc (ou lumineux) sur fond noir », d'où le nom de « Darkfield ».

Pour former l'éclairage Darkfield ; l'éclairage comprend ainsi une source de lumière (non représentée), par exemple obtenue au moyen de LEDs disposées en ligne, et de préférence une plaque diffusante 10 placée entre la source de lumière et le substrat, pour produire une lumière diffuse.

Un masque 12 (voir figures 1 et 2) est par exemple placé sur la plaque diffusante 10 pour masquer une partie de la zone d'éclairement de la plaque diffusante et former ainsi la zone sombre. Il s'agit ainsi d'une partie de la plaque vers laquelle le champ d'observation de la caméra est orienté. De préférence, l'axe optique de la caméra est centré sur le milieu de la zone sombre.

Le but est d'avoir la caméra observant une zone sombre de l'éclairage, entre deux zones d'éclairement proches.

D'une manière générale, le masque est de tout type adapté pour produire une zone sombre entre deux zones d'éclairement à partir d'une seule zone d'éclairement. Plus particulièrement, le masque a de préférence une forme de bande parallèle aux deux zones d'éclairement, qui forment elles-mêmes deux bandes d'éclairement.

La zone sombre est de préférence plus large que le champ d'observation de la caméra, de façon à ce que les bords de l'image observée soient bien en zone sombre. Dans l'exemple illustré, la zone sombre correspond à 2 à trois largeurs de champ d'observation, mais en variante, la largeur de la zone sombre est de tout type adapté.

La zone sombre a par exemple une largeur de 5mm ou moins.

En variante, la zone sombre est produite par tout autre moyen adapté, de même que les zones d'éclairement.

Il s'agit par exemple dans une variante de deux plaques d'éclairement diffus espacées pour former entre elles ladite zone sombre que la caméra doit observer.

Dans une autre variante, l'éclairage ne comprend pas de plaque diffusante mais simplement des réglettes de LEDs. Cette variante est cependant moins préférée car l'éclairage moins uniforme.

Ainsi pour résumer, d'une manière générale, l'éclairage est un éclairage de type Darkfield de tout type adapté.

De préférence encore, les deux zones d'éclairement produisent un éclairage diffus et de préférence uniforme, par exemple réalisé au moyen d'un objet diffusant entre la source de lumière et la feuille de verre.

En transmission, la caméra observe la zone sombre à travers la feuille de verre.

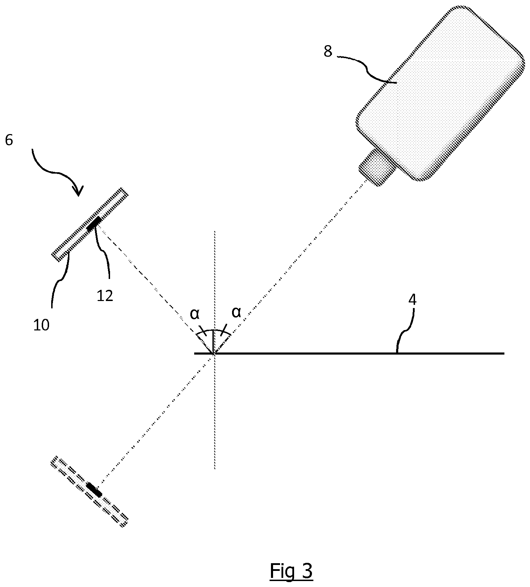

En réflexion (voir figure 3), la caméra observe l'image produite sur la feuille de verre après réflexion sur la surface de la feuille de verre. A cet effet, la figure 3 illustre une deuxième mode de réalisation dans laquelle l'éclairage et la caméra sont du même côté du substrat. La caméra et l'éclairage sont agencés de telle sorte que la caméra observe l'éclairage au niveau de sa zone sombre médiane, l'éclairage étant analogue à celui utilisé dans le premier mode de réalisation. La seule différence tient à l'agencement de la caméra et de l'éclairage.

S'agissant d'une caméra linéaire, l'image est reconstruite à partir de plusieurs prises de vues successives. Le champ d'observation de la caméra sur la feuille de verre est celui correspondant à une largeur d'un pixel, s'agissant d'une caméra linéaire.

De préférence, la mise au point de la caméra est faite sur la feuille de verre, de préférence sur le milieu de l'épaisseur de la feuille de verre.

En variante cependant, le nombre de prises de vue est de tout type adapté pour former une image dans laquelle le code est visible entièrement.

De façon préférée, le dispositif comprend un encodeur relié à la caméra pour mesurer le déplacement de la feuille de verre et le dispositif étant configuré pour commander le déclanchement des prises de vue par la caméra en fonction de l'avancement de la feuille de verre par rapport à la caméra.

Une fois l'image acquise, des programmes de traitement stockés dans la mémoire du calculateur, par exemple sur un support permanent ou amovible, sont mis en œuvre pour réaliser le traitement de l'image acquise par le calculateur, ainsi que le décodage du code.

Les programmes sont aptes à fournir l'information présente dans le code.

Cette information comprend par exemple un identifiant mais elle est en variante de tout type adapté et peut par exemple inclure le lieu et la date de fabrication.

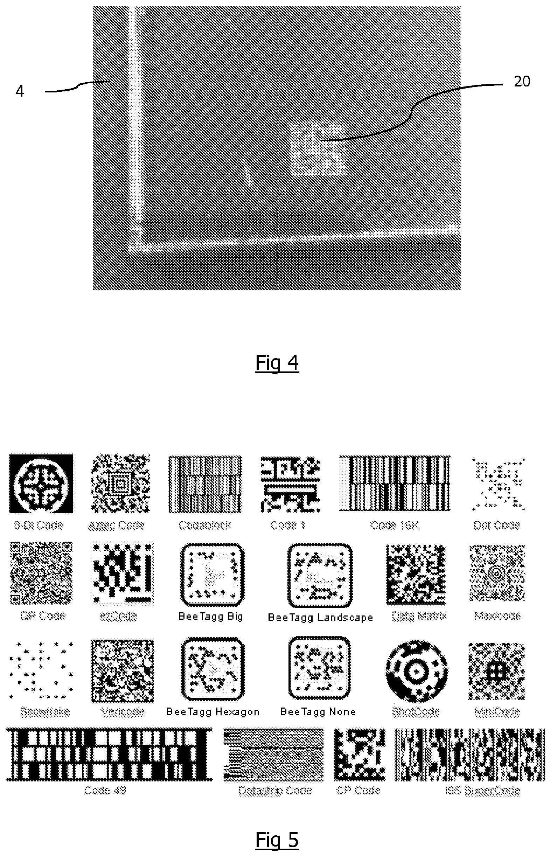

Chaque feuille de verre 2 est marquée d'un symbole 20 formant code. La figure 4 illustre une feuille de verre marquée d'un symbole 20 de type Datamatrix.

Le symbole 20 est en effet de préférence en deux dimensions, par exemple du type Datamatrix.

Le symbole 20 est par exemple marqué immédiatement après découpe du ruban de verre flotté en feuilles de verre de grandes dimensions, ou immédiatement avant ou même pendant la découpe. La feuille de verre a alors une largeur supérieure à 2 mètres et une longueur supérieure à 5 mètres.

A noter que le dispositif peut être utilisé dans une usine de fabrication de verre flotté ou par exemple dans une usine de transformation du verre pour fabriquer des vitrages pour le bâtiment ou l'automobile.

La feuille de verre présente par exemple un code sur chacune de ses deux faces, par exemple d'un côté respectif de la feuille, de façon à ce que le code puisse être lu que la feuille de verre soit retournée ou non. La profondeur de champ permise par le dispositif de lecture est alors très intéressante car elle permet de lire le code dans les deux cas.

A noter également que le symbole est de tout type adapté et non nécessairement de type Datamatrix. Il s'agit en variante d'un symbole en deux dimensions de tout type adapté. La figure 5 illustre d'autres types de codes connus, parmi eux : 3-DI code, Aztex Code, Codablock, Code 1, Code 16K, Dot Code, QR Code, ezCode, BeeTagg Big, BeeTagg Landscape, Data Matrix, Maxicode, Snpwflake, Verocode, BeeTagg Hexagon, BeeTagg None, ShotCode, MiniCode, Code 49, Datastrip Code, CP Code, ISS SuperCode. En variante encore, il s'agit d'un symbole en une seule dimension de type code-barres.

D'une manière générale, il s'agit d'un symbole formant un code de tout type adapté.

Pour réaliser le marquage du symbole, on utilise par exemple un laser de type CO₂ de 50W. A titre d'exemple, le laser est adapté pour altérer des propriétés du verre telles que sa couleur, sa surface ou son indice de réfraction et ainsi former le symbole.

L'appareil est disposé en regard d'une face principale de la feuille de verre.

Les feuilles de verre 2 ont par exemple une épaisseur comprise entre 0,5 et 19 mm, notamment entre 2 et 12 mm, par exemple entre 4 et 8mm. En variante cependant, les feuilles de verre ont une épaisseur de tout type adapté.

Il s'agit par exemple de verre silico-sodo-calcique mais il s'agit en variante d'un verre de tout type adapté.

D'une manière générale, il s'agit d'une feuille de verre de tout type adapté.

En outre, dans les exemples illustrés, les substrats comprennent une seule feuille de verre. En variante cependant, un substrat comprend plusieurs feuilles de verre. Il s'agit par exemple de vitrage feuilletés comprenant deux feuilles de verre feuilletées ensemble par l'intermédiaire d'un intercalaire en matière thermoplastique tel que du PVB, ou d'un produit verrier de type double vitrage ou plus généralement un produit verrier comprenant un vitrage simple ou multiple.

En outre, les feuilles de verre peuvent être revêtues de couches minces, ou imprimées. En effet, grâce au contraste obtenu avec le dispositif de lecture, il est possible de lire des codes y compris sur des verres revêtus de couches minces.

## Revendications

1. Dispositif (2) de lecture d'un symbole (20) formant code marqué sur une face d'un substrat (4) comprenant une feuille de verre, le substrat (4) étant en défilement, le dispositif (2) comprenant :
- un éclairage (6) ;
- une caméra (8) configurée pour acquérir au moins une image d'au moins une partie du symbole, le substrat en défilement étant éclairé par l'éclairage ;
- un calculateur relié à la caméra et configuré pour être apte à mettre en œuvre une étape de traitement d'image dans laquelle l'image acquise est traitée par le calculateur et décodée,
dans lequel la caméra (8) utilisée est linéaire et l'éclairage (6) est de type Darkfield et dans lequel le dispositif (2) est configuré pour réaliser, préalablement à l'étape de traitement par le calculateur, plusieurs acquisitions d'images avec la caméra linéaire de différentes parties du symbole.

2. Dispositif (2) selon la revendication 1, dans lequel l'éclairage (6) comprend deux zones d'éclairement et une zone sombre (12) entre les deux zones d'éclairement, la caméra linéaire observant la zone sombre (12).

3. Dispositif (2) selon la revendication 2, dans lequel la zone sombre(12) est obtenue en masquant une zone d'éclairement de l'éclairage (6).

4. Dispositif (2) selon l'une quelconque des revendications précédentes, dans lequel l'éclairage (6) comprend une source de lumière et un élément diffusant (10) couvrant la source de lumière de façon à produire une lumière diffuse.

5. Dispositif (2) selon les revendications 3 et 4 prises ensemble, dans lequel le plan de l'éclairement est perpendiculaire à l'axe optique de la caméra (8).

6. Dispositif (2) selon l'une quelconque des revendications précédentes, dans lequel la caméra (8) et l'éclairage (6) sont disposés de part et d'autre du substrat (4), le substrat étant transparent.

7. Dispositif (2) selon l'une quelconque des revendications 1 à 5, dans lequel la caméra (8) et l'éclairage (6) sont disposés du même côté du substrat (4), le substrat (4) ayant une surface spéculaire.

8. Dispositif (2) selon l'une quelconque des revendications précédentes, comprenant un appareil de mesure du déplacement du substrat, le dispositif étant configuré pour que le déclenchement de l'acquisition des images du substrat par la caméra linéaire (8) soit commandé en fonction du déplacement mesuré.

9. Dispositif (2) selon l'une quelconque des revendications précédentes, dans lequel le symbole (20) peut être lu et décodé à une position allant de 0mm jusqu'à 10mm par rapport au plan focal de la caméra.

10. Dispositif (2) selon l'une quelconque des revendications précédentes, dans lequel le champ de vision de la caméra est non parallèle et de préférence perpendiculaire par rapport à la direction de défilement du substrat.

11. Dispositif (2) selon l'une quelconque des revendications précédentes, dans lequel la largeur du champ de vision de la caméra est d'au moins 30mm.

12. Procédé de lecture d'un symbole (20) formant code marqué sur une face d'un substrat (4) comprenant une feuille de verre, le substrat étant en défilement, le procédé comprenant :
- au moins une acquisition, avec une caméra (8), d'une image d'au moins une partie du symbole, le substrat en défilement étant éclairé par un éclairage (6) ;
- une étape de traitement d'image dans laquelle l'image acquise est traitée par un calculateur et décodée,
dans lequel la caméra utilisée est linéaire et l'éclairage (6) est de type Darkfield et, préalablement à l'étape de traitement, plusieurs acquisitions d'images de différentes parties du symbole (20) sont réalisées avec la caméra linéaire.

13. Procédé selon la revendication précédente, utilisant un dispositif (2) de lecture selon l'une quelconque des revendications 1 à 11.

## Patentansprüche

1. Vorrichtung (2) zum Lesen eines codebildenden Symbols (20), das auf einer Fläche eines Substrats (4) markiert ist, das eine Glasscheibe umfasst, wobei das Substrat (4) sich bewegt, wobei die Vorrichtung (2) Folgendes umfasst:
- eine Beleuchtung (6);
- eine Kamera (8), die dazu konfiguriert ist, um mindestens ein Bild von mindestens einem Teil des Symbols aufzunehmen, wobei das sich bewegende Substrat von der Beleuchtung beleuchtet wird;
- einen Rechner, der an die Kamera angeschlossen und dazu konfiguriert ist, um einen Bildverarbeitungsschritt implementieren zu können, wobei das aufgenommene Bild von dem Rechner verarbeitet und decodiert wird,
wobei die verwendete Kamera (8) linear ist und die Beleuchtung (6) vom Typ Darkfield ist und wobei die Vorrichtung (2) dazu konfiguriert ist, um vor dem Verarbeitungsschritt durch den Rechner mehrere Bildaufnahmen verschiedener Teile des Symbols mit der linearen Kamera durchzuführen.

2. Vorrichtung (2) nach Anspruch 1, wobei die Beleuchtung (6) zwei Beleuchtungszonen und eine dunkle Zone (12) zwischen den beiden Beleuchtungszonen umfasst, wobei die lineare Kamera die dunkle Zone (12) beobachtet.

3. Vorrichtung (2) nach Anspruch 2, wobei die dunkle Zone (12) durch Verdecken einer Beleuchtungszone der Beleuchtung (6) erreicht wird.

4. Vorrichtung (2) nach einem der vorstehenden Ansprüche, wobei die Beleuchtung (6) eine Lichtquelle und ein Streuelement (10) umfasst, das die Lichtquelle abdeckt, um so ein Streulicht zu erzeugen.

5. Vorrichtung (2) nach den Ansprüchen 3 und 4 zusammengenommen, wobei die Beleuchtungsebene senkrecht zur optischen Achse der Kamera (8) ist.

6. Vorrichtung (2) nach einem der vorstehenden Ansprüche, wobei die Kamera (8) und die Beleuchtung (6) beiderseits des Substrats (4) angeordnet sind, wobei das Substrat transparent ist.

7. Vorrichtung (2) nach einem der Ansprüche 1 bis 5, wobei die Kamera (8) und die Beleuchtung (6) auf derselben Seite des Substrats (4) angeordnet sind, wobei das Substrat (4) eine spiegelnde Oberfläche aufweist.

8. Vorrichtung (2) nach einem der vorstehenden Ansprüche, umfassend ein Gerät zur Messung der Verschiebung des Substrats, wobei die Vorrichtung dazu konfiguriert ist, um das Auslösen der Aufnahme von Bildern des Substrats durch die lineare Kamera (8) in Abhängigkeit von der gemessenen Verschiebung zu steuern.

9. Vorrichtung (2) nach einem der vorstehenden Ansprüche, wobei das Symbol (20) an einer Position gelesen und decodiert werden kann, die von 0 mm bis 10 mm in Bezug auf die Fokalebene der Kamera reicht.

10. Vorrichtung (2) nach einem der vorstehenden Ansprüche, wobei das Sichtfeld der Kamera nicht parallel und vorzugsweise senkrecht in Bezug auf die Bewegungsrichtung des Substrats ist.

11. Vorrichtung (2) nach einem der vorstehenden Ansprüche, wobei die Breite des Sichtfeldes der Kamera mindestens 30 mm beträgt.

12. Verfahren zum Lesen eines codebildenden Symbols (20), das auf einer Fläche eines Substrats (4) markiert ist, das eine Glasscheibe umfasst, wobei das Substrat sich bewegt, wobei das Verfahren Folgendes umfasst:
- mindestens eine Aufnahme eines Bildes von mindestens einem Teil des Symbols mit einer Kamera (8), wobei das sich bewegende Substrat von einer Beleuchtung (6) beleuchtet wird;
- einen Bildverarbeitungsschritt, wobei das aufgenommene Bild von einem Rechner verarbeitet und decodiert wird,
wobei die verwendete Kamera linear ist und die Beleuchtung (6) vom Typ Darkfield ist und wobei vor dem Verarbeitungsschritt mehrere Bildaufnahmen verschiedener Teile des Symbols (20) mit der linearen Kamera durchgeführt werden.

13. Verfahren nach dem vorstehenden Anspruch unter Verwendung einer Vorrichtung (2) zum Lesen nach einem der Ansprüche 1 bis 11.

## Claims

1. A device (2) for reading a symbol (20) forming a code marked on one face of a substrate (4) comprising a glass sheet, the substrate (4) being on the run, the device (2) comprising:
- an illumination (6);
- a camera (8) configured to acquire at least one image of at least one portion of the symbol, the running substrate being illuminated by the illumination; and
- a processor connected to the camera and configured to be suitable for implementing an image-processing step in which the acquired image is processed by the processor and decoded;
in which the camera (8) used is linear and the illumination (6) is a dark field illumination, and in which the device (2) is configured to carry out, prior to the processor processing step, a plurality of image acquisitions with the linear camera of various portions of the symbol.

2. The device (2) as claimed in claim 1, in which the illumination (6) comprises two illuminating zones and a dark zone (12) between the two illuminating zones, the linear camera observing the dark zone (12).

3. The device (2) as claimed in claim 2, in which the dark zone (12) is obtained by masking a zone illuminated by the illumination (6).

4. The device (2) as claimed in any one of the preceding claims, in which the illumination (6) comprises a light source and a scattering element (10) covering the light source so as to produce a diffuse light.

5. The device (2) as claimed in claims 3 and 4 taken together, in which the illuminating plane is perpendicular to the optical axis of the camera (8).

6. The device (2) as claimed in any one of the preceding claims, in which the camera (8) and the illumination (6) are placed on either side of the substrate (4), the substrate being transparent.

7. The device (2) as claimed in any one of claims 1 to 5, in which the camera (8) and the illumination (6) are placed on the same side of the substrate (4), the substrate (4) having a specular surface.

8. The device (2) as claimed in any one of the preceding claims, comprising an apparatus for measuring the movement of the substrate, the device being configured so that the acquisition of the images of the substrate by the linear camera (8) is triggered depending on the measured movement.

9. The device (2) as claimed in any one of the preceding claims, in which the symbol (20) may be read and decoded in a position ranging from 0 mm to 10 mm from the focal plane of the camera.

10. The device (2) as claimed in any one of the preceding claims, in which the field of view of the camera is not parallel to and is preferably perpendicular to the run direction of the substrate.

11. The device (2) as claimed in any one of the preceding claims, in which the width of the field of view of the camera is at least 30 mm.

12. A method for reading a symbol (20) forming a code marked on one face of a substrate (4) comprising a glass sheet, the substrate being on the run, the method comprising:
- at least one acquisition, with a camera (8), of an image of at least one portion of the symbol, the running substrate being illuminated by an illumination (6); and
- an image-processing step in which the acquired image is processed by a processor and decoded;
in which the camera used is linear and the illumination (6) is a dark field illumination and, prior to the processing step, a plurality of acquisitions of images of various portions of the symbol (20) are carried out with the linear camera.

13. The method as claimed in the preceding claim, using a reading device (2) as claimed in any one of claims 1 to 11.
